# EUROPÄISCHE PATENTANMELDUNG

(11) **EP 0 659 537 A2**
(43) Veröffentlichungstag der Anmeldung: **28.06.1995**
(21) Anmeldenummer: 94890215.0
(22) Anmeldetag: 19.12.1994
(51) Int. Cl.: B29C 47/90, B29C 47/88

(54) **Vorrichtung zur Abkühlung von Kunststoffprofilen**

(30) Priorität: 23.12.1993 AT 2617/93
(71) Anmelder: Technoplast Kunststofftechnik Gesellschaft m.b.H., A-4563 Micheldorf (AT)
(72) Erfinder: Dorninger, Frank, A-4563 Micheldorf (AT)
(74) Vertreter: Babeluk, Michael, Dipl.-Ing. Mag.

(57) **Zusammenfassung**

Die Erfindung betrifft eine Vorrichtung zur Abkühlung von Kunststoffprofilen, mit einer Wanne zur Aufnahme eines Kühlmediums, durch das das Profil (7) geführt werden kann, und mit mindestens einer Zuströmöffnung (12) und mit mindestens einer Abströmöffnung (13) für Kühlwasser. Ein Vakuum kann in einfacher Weise dadurch erzeugt werden, daß eine Einrichtung zur Erzeugung von Unterdruck in der Wanne vorgesehen ist, die als selbst ansaugende Wasserpumpe (14) ausgebildet ist, deren Saugstutzen mit der Abströmöffnung (13) für Kühlwasser in Verbindung steht.

## Beschreibung

Die Erfindung betrifft eine Vorrichtung zur Abkühlung von Kunststoffprofilen, mit einer Wanne zur Aufnahme eines Kühlmediums, durch das das Profil geführt werden kann und mit mindestens einer Zuströmöffnung und mit mindestens einer Abströmöffnung für Kühlwasser.

Kunststoffprofile werden beispielsweise als Rahmenelemente für Fenster oder Türen benötigt. Bei ihrer Herstellung wird zunächst eine Kunststoffmasse, wie etwa PVC, durch eine dem Profil entsprechende Öffnung extrudiert. Unmittelbar nach der Extrusion besitzt das Profil eine teigige Konsistenz. Nach dem Extruder ist üblicherweise eine Vorrichtung zur Trockenkalibrierung vorgesehen, in der eine erste Abkühlung und Formstabilisierung erfolgt. Daran anschließend erfolgt ein weiterer Abkühlvorgang mittels eines Kühlmediums, im allgemeinen Wasser, um die Wärme aus den inneren Bereichen des Profils abzuführen.

Die Erfindung betrifft insbesonders eine solche Vorrichtung zur Naßkalibrierung. Diese Vorrichtungen können allgemein in zwei Typen untergliedert werden. Eine besonders effiziente Abkühlung ist durch das sogenannte Sprühbad möglich. Dabei wird das Profil durch eine Wanne geführt, die mit einer Vielzahl von Sprühdüsen bestückt ist, die auf das Profil gerichtet sind. Eine solche Vorrichtung ist sehr effizient, da die Wasserstrahlen mit hoher Geschwindigkeit auf das Profil auftreffen, wodurch ein guter Wärmeübergang gewährleistet ist. Außerdem ist es bei einer solchen Vorrichtung möglich, durch günstige Anordnung der Düsen an sich schwierig zu kühlende Bereiche des Profils, wie einspringende Ecken oder Materialansammlungen, verstärkt zu kühlen.

Das Sprühbad wird zumeist in einer geschlossenen Wanne realisiert, die während des Betriebes leicht evakuiert wird. Da im Inneren eines Hohlprofils jedenfalls Atmosphärendruck herrscht, bewirkt das Vakuum, daß sich das Profil innig an die in Abständen innerhalb der Wanne angeordneten Führungen anlegt und so exakt kalibriert wird. Das Vakuum beträgt etwa 0,1 bis 0,3 bar und wird durch Vakuumpumpen erzeugt, die Luft von der Oberseite der Wanne absaugen.

Nachteilig bei einer solchen Sprühbad-Vorrichtung ist der hohe Wasserverbrauch und die Empfindlichkeit der Düsen. Um eine optimale Wirkung eines solchen Sprühbades zu erreichen, müssen Düsen von extrem kleinem Durchmesser eingesetzt werden. Eine Anspeisung mit Frischwasser ist wegen des hohen Wasserverbrauchs im allgemeinen nicht möglich. Bei einer Wasserrückführung ist jedoch ein außerordentlich großer Aufwand zur Wasseraufbereitung notwendig. Trotz dieser Maßnahmen kann es zu Verstopfungen der Düsen kommen, was zu einer mangelnden Kühlung des Profils und zur Herstellung von Ausschuß führen kann.

Beim anderen bekannten Naßkühlsystem handelt es sich um das sogenannte Vollbad. Bei bekannten Vorrichtungen dieser Art, wie sie etwa in der DE - A 22 39 746 oder der DE - A 19 23 490 offenbart sind, wird das Profil durch eine oben offene Wanne geführt, die mit einem Kühlmedium, etwa Wasser, gefüllt ist. Bei diesem System ist eine Wasserzufuhr nur insoweit notwendig, als sie zur Regulierung der Temperatur des Bades benötigt wird. Vorrichtungen nach diesem Vollbadprinzip sind einfach, unproblematisch in der Handhabung und sparsam im Wasserverbrauch.

Allerdings war es bisher nicht in befriedigender Weise möglich, ähnlich wie beim Sprühbad einen Unterdruck indem Vollbad zu erzeugen. Neben diversen regeltechnischen Problemen kommt es in bestimmten Betriebszuständen zur Ausbildung von Stoßwellen, die nachteilige Auswirkungen zur Folge haben, die bis zur Zerstörung der Vorrichtung gehen können. Somit ist die Qualität der Kalibrierung bei bekannten Vorrichtungen nach dem Vollbad-Prinzip beschränkt.

Aufgabe der vorliegenden Erfindung ist es, eine Vorrichtung der oben beschriebenen Art, die nach dem Vollbadprinzip arbeitet, so weiterzubilden, daß die Effizienz gesteigert wird und daß eine verbesserte Kalibrierung möglich wird. Dabei sollen die wesentlichen Vorteile des Vollbades, nämlich die Einfachheit und Sparsamkeit im wesentlichen erhalten bleiben.

Erfindungsgemäß wird dies dadurch erreicht, daß eine Einrichtung zur Erzeugung von Unterdruck in der Wanne vorgesehen ist, die als selbst ansaugende Wasserpumpe ausgebildet ist, deren Saugstutzen mit der Abströmöffnung für Kühlwasser in Verbindung steht.

Auf diese Weise ist es in überraschender Weise möglich, innerhalb der Wanne eines Vollbades einen Unterdruck herzustellen, ohne sich den oben erwähnten Problemen gegenübergestellt zu sehen. Weiters tritt bei der Erzeugung des Vakuums über Wasserpumpen eine erhebliche Energieersparnis ein, da die Leistung der Wasserpumpe im günstigsten Fall weniger als die Hälfte der Leistung der Vakuumpumpen bei bekannten Vorrichtungen beträgt. Zusätzlich dazu können jedoch auch Vakuumpumpen zur Absaugung von Luft vorgesehen sein. Diese dienen jedoch nur zur Unterstützung und Regelung und vor allem dazu, um in die Wanne eingedrungene Luft zu entfernen.

Bevorzugt ist eine vorzugsweise regelbare Drosselvorrichtung im Bereich der Zuströmöffnung vorgesehen. Dadurch ist eine Regelung des Durchsatzes des Kühlmediums und eine gleichzeitige Beeinflussung des Vakuums möglich.

In einer bevorzugten Ausführungsvariante der Erfindung sind mehrere Führungen zur Kalibrierung des Profils vorgesehen, die als Wände ausgebildet sind, die die Wanne in Längsrichtung des Profils in mehrere Abschnitte unterteilen, wobei diese Wände Öffnungen zur Erzeugung einer turbulenten Strömung des Kühlwassers aufweisen.

Die Führungen teilen die Wanne in eine Vielzahl von Abschnitten, die in Axialrichtung des Profils nacheinander angeordnet sind. Wesentlich an der Erfindung ist jedoch, daß Öffnungen vorgesehen sind, die eine Strömung des Kühlmediums von einem Abschnitt in den nächsten ermöglichen. Durch den erzwungenen Umlauf des Kühlmediums wird im Bereich dieser Öffnungen Turbulenz erzeugt, die sich in die benachbarten Abschnitte hinein fortsetzt. Auf diese Weise kann ein Wärmeübergang zwischen Profil und Kühlmedium erzielt werden, der mit dem von Sprühbadsystemen vergleichbar ist.

Besonders günstig ist es, wenn die Öffnungen jeweils zweier benachbarter Wände gegeneinander versetzt angeordnet sind. Auf diese Weise wird neben der Turbulenz auch eine Globalströmung des Kühlmediums quer oder schräg zur Achse des Profils erzeugt, die den Wärmeübergang weiter verbessert.

In einer besonders bevorzugten Ausführungsvariante der Erfindung ist ein Teil der Öffnungen im Bereich besonders zu kühlender Oberflächenabschnitte des Profils angeordnet. Durch diese Maßnahme wird erreicht, daß an sich schwierig zu kühlende Profilbereiche, wie etwa einspringende Ecken, konkave Abschnitte oder Massenansammlungen besonders gekühlt werden, indem sie Bereichen höchster Turbulenz ausgesetzt werden. Auf diese Weise kann eine besonders gleichmäßige Abkühlung des Profils sichergestellt werden, was zur Vermeidung von Spannungen und zur Erhöhung der Maßhaltigkeit wichtig ist.

Weiters kann vorgesehen sein, daß eine Zuströmöffnung im Bereich einer Öffnung der Wanne angeordnet ist, durch die das Profil austritt und daß eine Abströmöffnung im Bereich einer Öffnung der Wanne angeordnet ist, durch die das Profil in die Wanne eintritt. Auf diese Weise wird das Profil und das Kühlmedium in Gegenstrom geführt, wodurch der Wärmeübergang optimiert wird. Es ist im Sinne der Erfindung jedoch auch möglich, zwei oder mehrere vollständig voneinander getrennte Kühlabschnitte hintereinander anzuordnen, die jeweils über eine eigene Zuströmöffnung und eine Abströmöffnung verfügen. Solche Kühlabschnitte sind durch Wände ohne Öffnungen voneinander getrennt.

In der Folge wird die Erfindung anhand des in den Figuren dargestellten Ausführungsbeispieles näher erläutert. Die Figuren zeigen:
Fig. 1 eine erfindungsgemäße Vorrichtung in einer Seitenansicht,
Fig. 2 die Vorrichtung in Fig. 1 in einer Ansicht von oben,
Fig. 3 einen Schnitt nach Linie III - III von Fig. 1 in vergrößertem Maßstab.

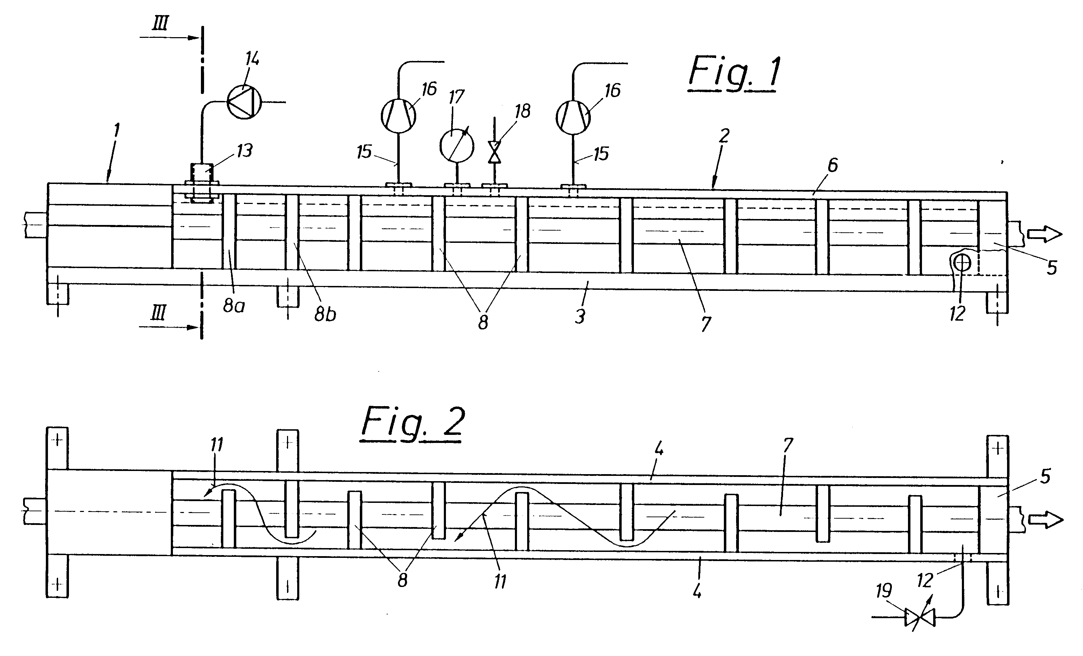

Die Vorrichtung von Fig. 1 besteht aus einer Trockenkalibriereinrichtung 1 und einer Naßkalibriereinrichtung 2. Die Naßkalibriereinrichtung 2 besteht aus einer Wanne, die aus einer Grundplatte 3 und Seitenwänden 4, sowie einer Endplatte 5 aufgebaut ist. Nach oben hin ist die Wanne 2 durch eine Deckplatte 6 abgeschlossen. Das aus der Trockenkalibriereinrichtung 1 austretende Profil 7 tritt unmittelbar in die Wanne ein und verläßt sie am anderen Ende durch die Endplatte 5. Innerhalb der Wanne sind mehrere Führungen 8 vorgesehen, die zur Kalibrierung des Profils 7 dienen.

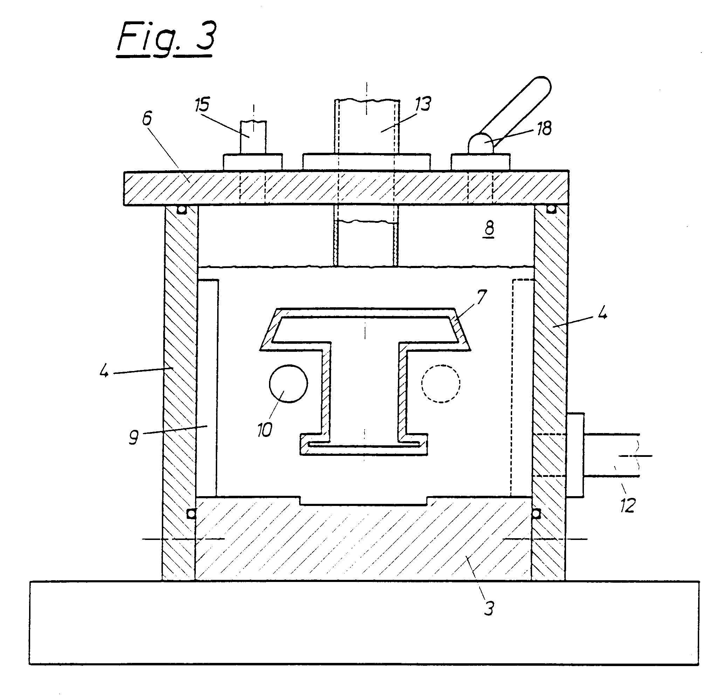

Aus der Fig. 3 ist der Aufbau der erfindungsgemäßen Vorrichtung im Querschnitt ersichtlich. Die Führungen 8 umschließen das Profil 7 und füllen den Querschnitt der Wanne fast vollständig aus, der durch die Grundplatte 3, die Seitenwände 4 und die Deckplatte 6 begrenzt wird. In dem in Fig. 3 gezeigten Beispiel bleiben lediglich Öffnungen 9 und 10 frei, die einen Flüssigkeitsaustausch zwischen den durch die Wand 8a getrennten Abschnitten 11a und 11b der Wanne ermöglichen. Die Öffnung 9 ist als Schlitz im Bereich einer Seitenwand 4 der Wanne ausgebildet. Die Öffnung 10 ist kreisförmig im Bereich eines konkaven Profilabschnittes vorgesehen, um die Kühlung hier zu verstärken.

Es ist im Sinne der Erfindung möglich, verschiedene Öffnungen 9 und 10 in der gleichen Wand 8a vorzusehen, wie dies in der Fig. 3 dargestellt ist. Es ist jedoch ebenso möglich, einen Teil der Wände mit länglichen Öffnungen 9 zu versehen und einen anderen Teil der Wände mit Öffnungen 10 im Bereich des Profils 7. Jedenfalls ist es jedoch günstig, die Öffnungen 9, 10 zweier benachbarter Wände 8a, 8b gegeneinander versetzt anzuordnen, wie dies in Fig. 3 strichliert angedeutet ist und auch aus Fig. 2 ersichtlich ist. Durch die Pfeile 11 in Fig. 2 ist der Hauptströmungsweg des Kühlmediums angedeutet.

Im Bereich der Endplatte 5 ist eine Zuströmöffnung 12 für das Kühlwasser vorgesehen. Die Abströmöffnung 13 im Bereich des Eintritts des Profils 7 ist mit einer selbstansaugenden Wasserpumpe 14 verbunden. Da in der erfindungsgemäßen Vorrichtung keine empfindlichen Düsen vorgesehen sind, kann ein Teilstrom des abgesaugten Wassers rückgeführt werden. Frischwasser wird im dem Ausmaß zugeführt, wie dies zur Regelung der Temperatur des Wasserbades erforderlich ist.

Um ein übermäßiges Absinken des Wasserspiegels in der Vorrichtung zu verhindern, sind mehrere Absaugungen 15 vorgesehen, die mit einer Vakuumpumpe 16 verbunden sind. Der Druck im Inneren des Systems kann mit einem Manometer 17 kontrolliert werden. Ein Kugelhahn 18 ermöglicht die händische Regulierung des Unterdruckes. An der Zuströmöffnung 12 ist ein Drosselventil 19 vorgesehen, mit dem der Unterdruck und der Volumenstrom des Kühlmediums beeinflußt werden kann.

## Patentansprüche

1. Vorrichtung zur Abkühlung von Kunststoffprofilen, mit einer Wanne zur Aufnahme eines Kühlmediums, durch das das Profil (7) geführt werden kann, und mit mindestens einer Zuströmöffnung (12) und mit mindestens einer Abströmöffnung (13) für Kühlwasser, dadurch gekennzeichnet, daß eine Einrichtung zur Erzeugung von Unterdruck in der Wanne vorgesehen ist, die als selbst ansaugende Wasserpumpe (14) ausgebildet ist, deren Saugstutzen mit der Abströmöffnung (13) für Kühlwasser in Verbindung steht.

2. Vorrichtung nach Anspruch 1, dadurch gekennzeichnet, daß zusätzlich Vakuumpumpen (16) zur Absaugung von Luft aus der Wanne vorgesehen sind.

3. Vorrichtung nach einem der Ansprüche 1 oder 2, dadurch gekennzeichnet, daß eine vorzugsweise regelbare Drosselvorrichtung (19) im Bereich der Zuströmöffnung (12) vorgesehen ist.

4. Vorrichtung nach einem der Ansprüche 1 bis 3, dadurch gekennzeichnet, daß mehrere Führungen zur Kalibrierung des Profils (7) vorgesehen sind, die als Wände (8) ausgebildet sind, die die Wanne in Längsrichtung des Profils (7) in mehrere Abschnitte (11) unterteilen und daß diese Wände (8) Öffnungen (9, 10) zur Erzeugung einer turbulenten Strömung des Kühlwassers aufweisen.

5. Vorrichtung nach einem der Ansprüche 1 bis 4, dadurch gekennzeichnet, daß die Öffnungen (9, 10) jeweils zweier benachbarter Wände (8) gegeneinander versetzt angeordnet sind.

6. Vorrichtung nach einem der Ansprüche 1 bis 5, dadurch gekennzeichnet, daß ein Teil der Öffnungen (9, 10) im Bereich besonders zu kühlender Oberflächenabschnitte des Profils (7) angeordnet ist.

7. Vorrichtung nach einem der Ansprüche 1 bis 6, dadurch gekennzeichnet, daß ein Teil der Öffnungen (9) als Ausnehmungen zwischen den Wänden (8) und den Wänden (4) der Wanne ausgebildet sind.

8. Vorrichtung nach einem der Ansprüche 1 bis 7, dadurch gekennzeichnet, daß eine Zuströmöffnung (12) im Bereich einer Öffnung der Wanne angeordnet ist, durch die das Profil (7) austritt und daß eine Abströmöffnung (13) im Bereich einer Öffnung der Wanne angeordnet ist, durch die das Profil (7) in die Wanne eintritt.
